# EUROPÄISCHE PATENTSCHRIFT

(11) **EP 2 115 334 B1**
(45) Veröffentlichungstag und Bekanntmachung des Hinweises auf die Patenterteilung: **18.04.2012**
(21) Anmeldenummer: 08701487.4
(22) Anmeldetag: 15.01.2008
(51) Int. Cl.: F16K 11/07

(54) **SCHIEBERVENTIL**
SLIDE VALVE
SOUPAPE À TIROIR

(30) Priorität: 31.01.2007 DE 102007004797; 05.07.2007 DE 102007031290
(43) Veröffentlichungstag der Anmeldung: 11.11.2009
(73) Patentinhaber: Continental Teves AG & Co. oHG, 60488 Frankfurt (DE)
(72) Erfinder: SCHIEL, Lothar, 65719 Hofheim (DE); DRUMM, Stefan, A., 55291 Saulheim (DE)
(86) Internationale Anmeldenummer: PCT/EP2008/050377
(87) Internationale Veröffentlichungsnummer: WO 2008/092735

(56) Entgegenhaltungen:
- DE-A1- 2 944 706
- FR-A- 986 439
- FR-A- 1 021 915
- FR-A- 2 887 950
- GB-A- 495 660
- NL-A- 283 489
- US-A- 3 422 852
- US-A- 3 744 523
- US-A- 4 457 341

## Beschreibung

Die Erfindung betrifft ein Schieberventil nach dem Oberbegriff des Patentanspruchs 1.

Aus DE 39 12 936 A1 ist ein Schieberventil zur Druckregelung in einem Bremskraftverstärker bekannt. Als besonders nachteilig muss die kostenintensive Fertigung dieses Schieberventils und die stets vorhandene Leckage bewertet werden. Der Ventilschieber und das Gehäuse sind in der Regel aus Stahl hergestellt und müssen gehärtet sein. Aus Gründen der Leckageminimierung muss die Durchmesserdifferenz sehr klein sein und die Form- und Lagetoleranzen müssen extrem streng ausgeführt werden. Dies verursacht hohe Kosten in der Fertigung.

Somit stellt der Wunsch nach möglichst geringen Leckagevolumenströmen eine besondere technische Herausforderung dar, weil bei der üblichen Abdichtung durch einen metallisch begrenzten Spalt dieser in der Größenordnung von wenigen Mikrometern ausgeführt werden muss. Eine solche Präzision ist nur mit speziellen Materialien wie Keramik oder dem bereits erwähnten gehärteten Stahl erreichbar. Eine Restleckage verbleibt bei einer Abdichtung über einen Spalt trotzdem.

Zwar ist bereits aus der Maschinenhydraulik die Verwendung von Elastomerdichtungen bekannt, die eine leckagefreie Abdichtung von Dichtspalten ermöglichen, wenn die Spaltgeometrie unverändert bleibt. Dies trifft beim herkömmlichen Schieberventil jedoch nicht auf die variablen Dichtspalte an Steuerkanten zu. Alle praktischen Versuche an variablen Dichtspalten elastomere Materialien einzusetzen führten zu einer Zerstörung der entsprechenden Dichtkörper, beispielsweise durch Abscheren an metallischen Steuerkanten oder durch Intrusion in Bohrungen.

Die US-A-3 422 852 offenbart ein Schieberventil, dessen mit mehreren Radialbohrungen versehener Ventilschieber zwei voneinander getrennte, unabhängig voneinander durchströmbare Hohlräume aufweist, wovon der eine Hohlraum mit einem Hochdruckanschluss im Ventilgehäuse in Verbindung steht und der andere Hohlraum mit einem Arbeitsanschluss zusammenwirkt.

Aus US-A-3 744 523 ist bereits ein Schieberventil der gattungsbildenden Art bekannt, dessen kolbenförmiger Ventilschieber in einem Gehäuse abgedichtet ist, wozu in das Gehäuse ein paar Laufbuchsen eingesetzt sind, die sowohl im Kontaktbereich mit dem Gehäuses als auch im Kontaktbereich mit dem Ventilschieber mit Radialdichtringen versehen sind. Der Ventilschieber weist mehrere durchströmbare Radialbohrungen auf, die mit mehreren in den beiden Laufbuchsen umlaufenden Steuerkanten zusammenwirken.

Daher ist es die Aufgabe der vorliegenden Erfindung, ein Schieberventil der angegebenen Art derart zu verbessern, dass es die genannten Nachteile nicht aufweist.

Diese Aufgabe wird erfindungsgemäß für ein Schieberventil der angegebenen Art mit den kennzeichnenden Merkmalen des Patentanspruchs 1 gelöst.

Weitere Merkmale und Vorteile der Erfindung gehen im Folgenden aus der Beschreibung eines Ausführungsbeispiels anhand einer Zeichnung hervor.

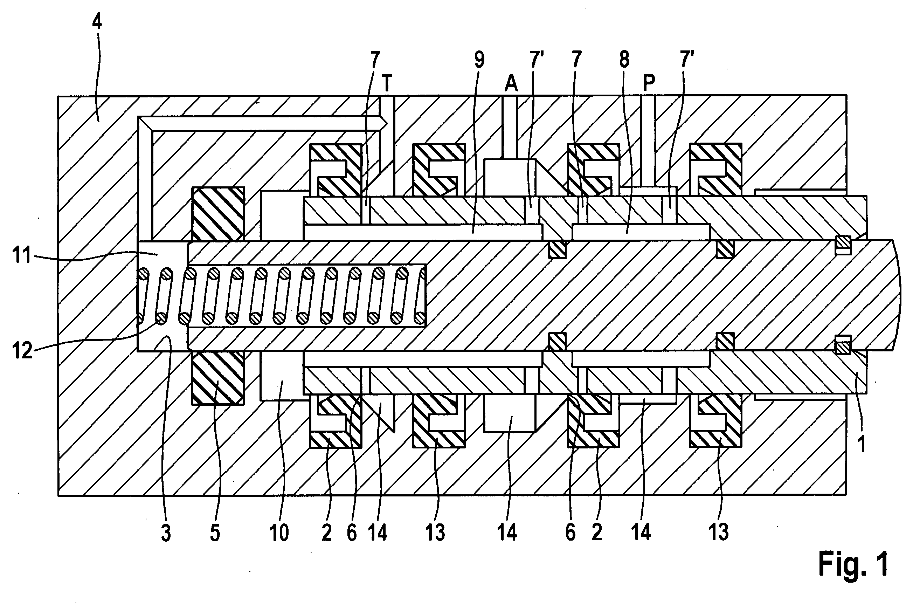

Anhand der Figur 1 werden nunmehr der grundlegende Aufbau und die Funktion des erfindungsgemäßen Schieberventils erläutert.

Das im Längsschnitt abgebildete Schieberventil dient zur Regelung des hydraulischen Drucks an einem Arbeitsanschluss A auf Werte zwischen einem Niederdruck und einem Hochdruck, wozu ein kolbenförmiger Ventilschieber 1 in einer Bohrung 3 eines Gehäuses 4 linear beweglich aufgenommen ist, das einen Niederdruckanschluss T, einen Hochdruckanschluss P und den Arbeitanschluss A aufweist.

In der exemplarisch abgebildeten ersten Stellung des Ventilschiebers 1 ist der Arbeitsanschluss A mit dem Niederdruckanschluss T verbunden, während in einer zweiten Stellung des Ventilschiebers 1 der Arbeitsanschluss A von den beiden Anschlüssen P, T isoliert ist, sowie in einer dritten Stellung des Ventilschiebers 1 der Arbeitsanschluss A mit dem Hochdruckanschluss P verbunden ist. Diese drei Stellungen des Ventilschiebers 1 werden beim Betätigen des Ventilschiebers 1 unter einer in der Abbildung nach links gerichteten Betätigungskraft in aufsteigender Reihenfolge durchlaufen, wobei das Absperren und das Freigeben der Fluidverbindungen gehäuseseitig durch umlaufende Steuerkanten 6 erfolgt.

Im Gegensatz zum Stand der Technik, bei dem die umlaufenden Steuerkanten am Ventilschieber mit durchströmbaren Radial-bohrungen im Gehäuse zusammenwirken, wird nunmehr erfindungsgemäß vorgeschlagen im Ventilschieber 1 durchströmbare Radialbohrungen 7 anzuordnen, die mit den im Gehäuse 4 umlaufenden Steuerkanten 6 zusammenwirken.

Die mit den gehäuseseitigen Steuerkanten 6 zusammenwirkenden Radialbohrungen 7 sind absperrbar gestaltet, indem zum Absperren die Mündungen der Radialbohrungen 7 durch Überfahren der Steuerkanten 6 verschlossen werden. Die Durchströmung der absperrbaren Radialbohrungen 7 erfolgt im Bereich mehrerer im Gehäuse 4 fixierter Dichtringe 2 immer von innen nach außen, sodass eine Beschädigung der Dichtringe 2 durch Abscheren oder Intrusion ausgeschlossen ist.

Die Steuerkanten 6 sind unmittelbar an den Dichtringen 2 ausgebildet, die in Ringnuten des Gehäuses 4 sicher fixiert sind. Zur leckagefreien Abdichtung des Ventilschiebers 1 im Gehäuse 4 bestehen zumindest die Dichtflächen der Dichtringe 2 aus einem elastomeren Material, die im vorliegenden Ausführungsbeispiel bevorzugt Dichtlippen aufweisen, die bei Manschettendichtungen verwendet werden.

Zur einfachen Realisierung der gewünschten Durchströmung weist der Ventilschieber 1 zwei voneinander getrennte, unabhängig voneinander durchströmbare Hohlräume 8, 9 auf, wobei der eine Hohlraum 8 (Hochdruckhohlraum) mit dem Hochdruckanschluss P und der andere Hohlraum 9 (Arbeitsdruckhohlraum) mit dem Arbeitsanschluss A in permanenter hydraulischer Verbindung steht. Es bestehen weiterhin permanente hydraulische Verbindungen zu beiden Hohlräume 8, 9, die auf einfache Weise durch nicht absperrbare Radialbohrungen 7' im Ventilschieber 1 gebildet sind, die somit entfernt vom Wirkbereich derjenigen Steuerkanten 6 angeordnet sind, die vom Ventilschieber 1 überfahren werden, wobei die nicht absperrbaren Radialbohrungen 7' im Gegensatz zu den mit den Steuerkanten 6 zusammenwirkenden Radialbohrungen 7 immer von außen nach innen durchströmt werden.

Zur einfachen Integration der beiden Hohlräume 8, 9 ist der Ventilschieber 1 derart zweiteilig aufgebaut, dass zumindest der erste Hohlraum 8 (Hochdruck-Hohlraum) durch das Zusammenfügen der beiden Schieberteile entsteht. Hierzu sind die beiden Schieberteile druckdicht zusammengefügt, sodass der erste Hohlraum 8 (Hochdruck-Hohlraum) so abgedichtet ist, dass ein Druckmittelaustausch nur über die zugeordneten Radialbohrungen 7, 7' erfolgt. Hingegen ist der zweite Hohlraum 9 (Arbeitsdruck-Hohlraum) aufgrund der geschickten Anordnung des Niederdruckanschlusses T, Arbeitsanschlusses A und Hochdruckanschlusses P in Betätigungsrichtung als offener Ringraum zwischen dem außen liegenden, hülsenförmigen Schieberteil und dem in das hülsenförmige Schieberteil eingepressten, stempelförmigen Schieberteil ausgeführt.

Die Öffnung des zweiten Hohlraums 9 (Arbeitsdruck-Hohlraum) erstreckt sich in Betätigungsrichtung bis in eine radial erweiterte Kammer 10, die von einer Bohrungsstufe begrenzt wird, wobei der jeweils in der Kammer 10 herrschende Druck den Ventilschieber 1 entgegen der Betätigungsrichtung beaufschlagt. Da das Ende des stempelförmigen Schieberteils sich aus dem hülsenförmigen Schieberteil in die Bohrungsstufe erstreckt, bildet die hydraulische Kammer 10 einen Ringraum, der von der Stufenbohrung und dem darin eintauchenden Stufenkolbenabschnitt des Ventilschiebers 1 begrenzt ist, wobei der Volumeninhalt der Kammer 10 vom Verfahrweg des Ventilschiebers 1 abhängt.

Zwischen dem Boden der Bohrung 3 und der Stirnfläche des stempelförmigen Schieberteils befindet sich ein Druckraum 11, der mit dem Niederdruckanschluss T verbunden ist. Infolge der Abdichtung des Stufenkolbenabschnitts innerhalb der Bohrung 3 mittels einer Ringdichtung 5 ist der Druckentlastungsraum 11 gegenüber der Kammer 10 hydraulisch getrennt. Innerhalb des Druckraums 11 befindet sich eine Feder 12, die den Ventilschieber 1 entgegen seiner Betätigungsrichtung mit einer definierten Kraft beaufschlagt. Alternativ kann die Feder 12 in der hydraulischen Kammer 10 und dem Arbeitsdruck-Hohlraum 9 angeordnet werden.

Ferner geht aus Figur 1 hervor, dass der Hochdruckanschluss P in einen im Gehäuse 4 integrierten Ringraum 14 einmündet, der in Betätigungsrichtung des Ventilschiebers 1 von dem die (Hochdruck-)Steuerkante 6 bildenden Dichtring 2 und entgegen der Betätigungsrichtung von einer weiteren Dichtung 13, vorzugsweise einer Manschettendichtung zwischen Ventilschieber 1 und Gehäuse 4 abgedichtet ist. Ebenso mündet der Arbeitsanschluss A in einen weiteren Ringraum 14 des Gehäuses 1 ein, der aber entgegen der Betätigungsrichtung von dem die (Hochdruck-)Steuerkante 6 bildenden Dichtring 2 und in Betätigungsrichtung von einer weiteren Dichtung 13, vorzugsweise einer Manschettendichtung zwischen dem Ventilschieber 1 und dem Gehäuse 4 abgedichtet ist. Zwar mündet auch der Niederdruckanschluss T in einen Ringraum 14 im Gehäuse 4, der jedoch in Betätigungsrichtung von dem die (Niederdruck-)Steuerkante 6 tragenden Dichtring 2 und in Betätigungsrichtung von einer der weiteren Dichtungen 13 zwischen Ventilschieber 1 und Gehäuse 4 abgedichtet ist.

Weiterhin ist aus Figur 1 ersichtlich, dass die dem Druckaufbau zugeordneten, absperrbaren Radialbohrungen 7 im Wesentlichen in einer Ebene angeordnet sind, wobei nach Wunsch oder Bedarf durch gezielte kleine Abweichungen der Bohrungspositionen in Richtung der Ventilschieberachse ein weicheres Druckaufbauverhalten hergestellt werden kann. Ferner gilt es zu beachten, dass die absperrbaren Radialbohrungen 7 einen geringeren Durchmesser aufweisen als die nicht absperrbaren Radialbohrungen 7', womit ein weiterer Beitrag zur Langlebigkeit der Dichtringe 2 geleistet wird, welche die Funktion der Steuerkanten 6 übernehmen.

### Bezugszeichenliste

- 1: Ventilschieber
- 2: Dichtring
- 3: Bohrung
- 4: Gehäuse
- 5: Ringdichtung
- 6: Steuerkante
- 7, 7': Radialbohrung
- 8: Hohlraum
- 9: Hohlraum
- 10: Kammer
- 11: Druckentlastungsraum
- 12: Feder
- 13: Dichtung
- 14: Ringraum

## Patentansprüche

1. Schieberventil zur Regelung des hydraulischen Drucks an einem Arbeitsanschluss (A) auf Werte zwischen einem Niederdruck und einem Hochdruck, wozu ein Ventilschieber (1) in einer Bohrung (3) eines Gehäuses (4) linear beweglich aufgenommen ist, das einen Niederdruckanschluss (T), einen Hochdruckanschluss (P) und den Arbeitsanschluss (A) aufweist, wozu in der ersten Stellung des Ventilschiebers (1) der Arbeitsanschluss (A) mit dem Niederdruckanschluss (T) verbunden ist, während in einer zweiten Stellung des Ventilschiebers (1) der Arbeitsanschluss (A) von den beiden weiteren Anschlüssen (P, T) getrennt ist, sowie mit einer dritten Stellung des Ventilschiebers (1), in welcher der Arbeitsanschluss (A) mit dem Hochdruckanschluss (P) verbunden ist, wobei im Ventilschieber (1) mehrere durchströmbare Radialbohrungen (7) angeordnet sind, die mit mehreren im Gehäuse (4) umlaufenden Steuerkanten (6) zusammenwirken, wobei der Ventilschieber (1) zwei voneinander getrennte, unabhängig voneinander durchströmbare Hohlräume (8, 9) aufweist, wobei der eine Hohlraum (8) mit dem Hochdruckanschluss (P) und der andere Hohlraum (9) mit dem Arbeitsanschluss (A) in permanenter hydraulischer Verbindung steht, **dadurch gekennzeichnet, dass** der zweite (Arbeitsdruck-)Hohlraum (9) in Betätigungsrichtung des Ventilschiebers (1) als offener Ringraum ausgeführt ist, der zwischen einem außen liegenden, hülsenförmigen Schieberteil und einem sich in das hülsenförmige Schieberteil erstreckenden, stempelförmigen Schieberteil angeordnet ist.

2. Schieberventil nach Anspruch 1, **dadurch gekennzeichnet, dass** die mit den gehäuseseitigen Steuerkanten (6) zusammenwirkenden Radialbohrungen (7) absperrbar gestaltet sind, indem zum Absperren die Mündungen der Radialbohrungen (7) durch Überfahren der Steuerkanten (6) verschließbar sind.

3. Schieberventil nach Anspruch 1 oder 2, **dadurch gekennzeichnet, dass** die mit den Steuerkanten (6) zusammenwirkenden Radialbohrungen (7) im Bereich mehrerer im Gehäuse (4) fixierter Dichtringe (2) von innen nach au-βen radial durchströmbar sind.

4. Schieberventil nach Anspruch 3, **dadurch gekennzeichnet, dass** die Steuerkanten (6) unmittelbar an den Dichtringen (2) ausgebildet sind, die in Ringnuten des Gehäuses (4) sicher fixiert sind.

5. Schieberventil nach Anspruch 3, **dadurch gekennzeichnet, dass** zur leckagefreien Abdichtung des Ventilschiebers (1) im Gehäuse (4) zumindest die Dichtflächen der Dichtringe (2) aus einem elastomeren Material bestehen, die vorzugsweise als Manschettendichtungen ausgebildet sind.

6. Schieberventil nach Anspruch 1, **dadurch gekennzeichnet, dass** weitere, permanente hydraulische Verbindungen zu beiden Hohlräume (8, 9) bestehen, die durch nicht absperrbare Radialbohrungen (7') im Ventilschieber (1) gebildet sind, die entfernt vom Wirkbereich derjenigen Steuerkanten (6) angeordnet sind, die vom Ventilschieber (1) überfahrbar sind.

7. Schieberventil nach Anspruch 6, **dadurch gekennzeichnet, dass** die nicht absperrbaren Radialbohrungen (7') im Gegensatz zu den mit den Steuerkanten (6) zusammenwirkenden Radialbohrungen (7) ausschließlich von außen nach innen durchströmt werden.

8. Schieberventil nach Anspruch 1, **dadurch gekennzeichnet, dass** sich der zweite Hohlraum (9) in Betätigungsrichtung des Ventilschiebers (1) bis in eine radial erweiterte Kammer (10) erstreckt, die von einer Bohrungsstufe begrenzt ist, wobei der Ventilschieber (1) von einem in der Kammer (10) herrschenden Druck entgegengesetzt zur Betätigungsrichtung des Ventilschiebers (1) beaufschlagbar ist.

9. Schieberventil nach Anspruch 1, **dadurch gekennzeichnet, dass** die hydraulische Kammer (10) als Ringraum ausgebildet ist, deren Volumeninhalt vom Verfahrweg des Ventilschiebers (1) bestimmt ist.

10. Schieberventil nach Anspruch 1, **dadurch gekennzeichnet, dass** zwischen dem Boden der Bohrung (3) und der Stirnfläche des stempelförmigen Schieberteils am Ventilschieber (1) ein von der Kammer (10) getrennter Druckentlastungsraum (11) angeordnet ist, der mit dem Niederdruckanschluss (T) verbunden ist.

11. Schieberventil nach Anspruch 1, **dadurch gekennzeichnet, dass** zur Erzeugung einer Rückstellkraft auf den Ventilschieber (1) zwischen dem Gehäuse (4) und dem Ventilschieber (1) eine Feder (12) angeordnet ist, die den Ventilschieber (1) entgegen seiner Betätigungsrichtung mit einer vom Betätigungsweg abhängigen Kraft beaufschlagt.

12. Schieberventil nach Anspruch 11, **dadurch gekennzeichnet, dass** die Feder (12) innerhalb eines Druckentlastungsraums (11) angeordnet ist.

13. Schieberventil nach Anspruch 11, **dadurch gekennzeichnet, dass** die Feder (12) in einer hydraulischen Kammer (10) und in einem Arbeitsdruck-Hohlraum (9) angeordnet ist.

14. Schieberventil nach Anspruch 1, **dadurch gekennzeichnet, dass** der Hochdruckanschluss (P) in einen im Gehäuse (4) integrierten Ringraum (14) einmündet, der in Betätigungsrichtung des Ventilschiebers (1) von einem die (Hochdruck-)Steuerkante (6) bildenden Dichtring (2) und entgegen der Betätigungsrichtung von einer weiteren Dichtung (13) zwischen dem Ventilschieber (1) und Gehäuse (4) abgedichtet ist.

15. Schieberventil nach Anspruch 1, **dadurch gekennzeichnet, dass** der Arbeitsanschluss (A) in einen weiteren Ringraum (14) des Gehäuses (4) einmündet, der entgegen der Betätigungsrichtung des Ventilschiebers (1) von einem die (Hochdruck-)Steuerkante (6) bildenden Dichtring (2) und in Betätigungsrichtung von einer weiteren Dichtung (13) zwischen dem Ventilschieber (1) und dem Gehäuse (4) abgedichtet ist.

16. Schieberventil nach Anspruch 1, **dadurch gekennzeichnet, dass** der Niederdruckanschluss (T) in einen Ringraum (14) im Gehäuse (4) einmündet, der in Betätigungsrichtung von einem die (Niederdruck-)Steuerkante (6) tragenden Dichtring (2) und in Betätigungsrichtung von einer der weiteren Dichtungen (13) zwischen Ventilschieber (1) und Gehäuse (4) abgedichtet ist.

17. Schieberventil nach Anspruch 7, **dadurch gekennzeichnet, dass** die absperrbaren Radialbohrungen (7) nahezu in einer Ebene am Ventilschieber (1) angeordnet sind, und dass die absperrbaren Radialbohrungen (7) einen geringeren Durchmesser aufweisen als die nicht absperrbaren Radialbohrungen (7').

## Claims

1. Sliding-spool valve for controlling the hydraulic pressure at a working port (A) to values between a low pressure and a high pressure, for which a valve spool (1) is accommodated in a bore (3) of a housing (4) in a linearly movable manner and which has a low-pressure port (T), a high-pressure port (P) and the working port (A), for which in the first position of the valve spool (1) the working port (A) is connected to the low-pressure port (T), while in a second position of the valve spool (1) the working port (A) is isolated from the two further ports (P, T), and also with a third position of the valve spool (1) in which the working port (A) is connected to the high-pressure port (P), wherein a plurality of radial bores (7) which are exposable to throughflow are arranged in the valve spool (1) and interact with a plurality of encompassing metering edges (6) in the housing (4), wherein the valve spool (1) has two cavities (8, 9) which are isolated from each other and exposable to throughflow independently of each other, wherein the one cavity (8) is in permanent hydraulic communication with the high-pressure port (P) and the other cavity (9) is in permanent hydraulic communication with the working port (A), **characterized in that** the second (working-pressure) cavity (9) in the operating direction of the valve spool (1) is constructed as an open annulus which is arranged between an outer sleeve-like spool section and a plunger-like spool section which extends into the sleeve-like spool section.

2. Sliding-spool valve according to Claim 1, **characterized in that** the radial bores (7) which interact with the housing-side metering edges (6) are designed in a blockable manner by the mouths of the radial bores (7) being closable by over-travelling of the metering edges (6) for the blocking.

3. Sliding-spool valve according to Claim 1 or 2, **characterized in that** the radial bores (7) which interact with the metering edges (6) are radially exposable to throughflow from the inside outwards in the region of a plurality of sealing rings (2) which are fixed in the housing (4).

4. Sliding-spool valve according to Claim 3, **characterized in that** the metering edges (6) are formed directly on the sealing rings (2) and are securely fixed in annular grooves of the housing (4).

5. Sliding-spool valve according to Claim 3, **characterized in that** for leakage-free sealing of the valve spool (1) in the housing (4) at least the sealing faces of the sealing rings (2) consist of an elastomer material and are preferably formed as cup seals.

6. Sliding-spool valve according to Claim 1, **characterized in that** there are further permanent hydraulic connections to the two cavities (8, 9), which are formed by means of non-blockable radial bores (7') in the valve spool (1) which are arranged at a distance from the working area of those metering edges (6) which can be over-travelled by the valve spool (1).

7. Sliding-spool valve according to Claim 6, **characterized in that** the non-blockable radial bores (7'), in contrast to the radial bores (7) which interact with the metering edges (6), are exposed to throughflow exclusively from the outside inwards.

8. Sliding-spool valve according to Claim 1, **characterized in that** the second cavity (9) in the operating direction of the valve spool (1) extends into a radially widened chamber (10) which is delimited by a bore step, wherein the valve spool (1) can be acted upon opposite to the operating direction of the valve spool (1) by a pressure which prevails in the chamber (10).

9. Sliding-spool valve according to Claim 1, **characterized in that** the hydraulic chamber (10) is formed as an annulus, the volumetric capacity of which is determined by the travel distance of the valve spool (1).

10. Sliding-spool valve according to Claim 1, **characterized in that** between the bottom of the bore (3) and the end face of the plunger-like spool section a pressure-relief chamber (11), which is isolated from the chamber (10), is arranged on the valve spool (1) and is connected to the low-pressure port (T).

11. Sliding-spool valve according to Claim 1, **characterized in that** for creating a restoring force upon the valve spool (1), a spring (12) is arranged between the housing (4) and the valve spool (1), and with a force which is dependent upon the operating distance acts upon the valve spool (1) opposite to its operating direction.

12. Sliding-spool valve according to Claim 11, **characterized in that** the spring (12) is arranged inside the pressure-relief chamber (11).

13. Sliding-spool valve according to Claim 11, **characterized in that** the spring (12) is arranged in the hydraulic chamber (10) and in a working-pressure cavity (9).

14. Sliding-spool valve according to Claim 1, **characterized in that** the high-pressure port (P) leads into an annulus (14) which is integrated in the housing (4) and which in the operating direction of the valve spool (1) is sealed between the valve spool (1) and housing (4) by a sealing ring (2) which forms the (high-pressure) metering edge (6), and opposite to the operating direction is sealed between the valve spool (1) and housing (4) by a further seal (13).

15. Sliding-spool valve according to Claim 1, **characterized in that** the working port (A) leads into a further annulus (14) of the housing (4), which annulus opposite to the operating direction of the valve spool (1) is sealed between the valve spool (1) and the housing (4) by a sealing ring (2) which forms the (high-pressure) metering edge (6), and in the operating direction is sealed between the valve spool (1) and the housing (4) by a further seal (13).

16. Sliding-spool valve according to Claim 1, **characterized in that** the low-pressure port (T) leads into an annulus (14) in the housing (4), which annulus in the operating direction is sealed between valve spool (1) and housing (4) by a sealing ring (2) which carries the (low-pressure) metering edge (6), and in the operating direction is sealed between valve spool (1) and housing (4) by one of the further seals (13).

17. Sliding-spool valve according to Claim 7, **characterized in that** the blockable radial bores (7) are arranged on the valve spool (1) approximately in one plane, and **in that** the blockable radial bores (7) have a smaller diameter than the non-blockable radial bores (7').

## Revendications

1. Soupape à tiroir pour la régulation de la pression hydraulique au niveau d'un raccord de travail (A) à des valeurs entre une basse pression et une haute pression, un tiroir de soupape (1) étant à cet effet reçu dans un alésage (3) d'un boîtier (4) de manière déplaçable linéairement, le boîtier présentant un raccord basse pression (T), un raccord haute pression (P) et le raccord de travail (A), le raccord de travail (A) étant à cet effet connecté au raccord basse pression (T) dans la première position du tiroir de soupape (1), tandis que dans une deuxième position du tiroir de soupape (1), le raccord de travail (A) est séparé des deux autres raccords (P, T), et comprenant une troisième position du tiroir de soupape (1), dans laquelle le raccord de travail (A) est connecté au raccord haute pression (P), plusieurs alésages radiaux (7) étant disposés dans le tiroir de soupape (1), lesquels coopèrent avec plusieurs arêtes de commande (6) tournant dans le boîtier (4), le tiroir de soupape (1) présentant deux cavités (8, 9) séparées l'une de l'autre, pouvant être parcourues par l'écoulement indépendamment l'une de l'autre, l'une des cavités (8) étant en liaison hydraulique permanente avec le raccord haute pression (P) et l'autre cavité (9) étant en liaison hydraulique permanente avec le raccord de travail (A), **caractérisée en ce que** la deuxième cavité (de pression de travail) (9) est réalisée dans la direction d'actionnement du tiroir de soupape (1) sous forme d'espace annulaire ouvert, qui est disposé entre une partie de tiroir en forme de douille située à l'extérieur et une partie de tiroir en forme de poinçon s'étendant dans la partie de tiroir en forme de douille.

2. Soupape à tiroir selon la revendication 1,
**caractérisée en ce que** les alésages radiaux (7) coopérant avec les arêtes de commande (6) du côté du boîtier sont configurés de manière à pouvoir être bloqués, par le fait que pour le blocage, les embouchures des alésages radiaux (7) peuvent être fermées par le passage par-dessus elles des arêtes de commande (6).

3. Soupape à tiroir selon la revendication 1 ou 2,
**caractérisée en ce que** les alésages radiaux (7) coopérant avec les arêtes de commande (6) peuvent être parcourus par l'écoulement dans la région de plusieurs bagues d'étanchéité (2) fixées dans le boîtier (4), et ce radialement de l'intérieur vers l'extérieur.

4. Soupape à tiroir selon la revendication 3,
**caractérisée en ce que** les arêtes de commande (6) sont réalisées directement sur les bagues d'étanchéité (2), qui sont fixées de manière sûre dans des rainures annulaires du boîtier (4).

5. Soupape à tiroir selon la revendication 3,
**caractérisée en ce que** pour l'étanchéité sans fuites du tiroir de soupape (1) dans le boîtier (4), au moins les surfaces d'étanchéité des bagues d'étanchéité (2) se composent d'un matériau élastomère, ces surfaces d'étanchéité étant réalisées de préférence sous forme de gaines d'étanchéité.

6. Soupape à tiroir selon la revendication 1,
**caractérisée en ce que** d'autres liaisons hydrauliques permanentes avec les deux cavités (8, 9) existent, lesquelles sont formées par des alésages radiaux (7') non blocables dans le tiroir de soupape (1), lesquels alésages radiaux sont disposés à distance de la plage d'action des arêtes de commande respectives (6) par-dessus lesquelles le tiroir de soupape (1) peut passer.

7. Soupape à tiroir selon la revendication 6,
**caractérisée en ce que** les alésages radiaux non blocables (7'), contrairement aux alésages radiaux (7) coopérant avec les arêtes de commande (6), sont parcourus exclusivement par l'écoulement de l'extérieur vers l'intérieur.

8. Soupape à tiroir selon la revendication 1,
**caractérisée en ce que** la deuxième cavité (9) s'étend dans la direction d'actionnement du tiroir de soupape (1) jusque dans une chambre (10) s'élargissant radialement, qui est limitée par un étage d'alésage, le tiroir de soupape (1) pouvant être sollicité par une pression régnant dans la chambre (10) dans une direction opposée à la direction d'actionnement du tiroir de soupape (1).

9. Soupape à tiroir selon la revendication 1,
**caractérisée en ce que** la chambre hydraulique (10) est réalisée sous forme d'espace annulaire, dont le contenu volumique est déterminé par la course de déplacement du tiroir de soupape (1).

10. Soupape à tiroir selon la revendication 1,
**caractérisée en ce qu'**entre le fond de l'alésage (3) et la surface frontale de la partie de tiroir en forme de poinçon sur le tiroir de soupape (1), est disposé un espace de détente de pression (11) séparé de la chambre (10), qui est connecté au raccord basse pression (T).

11. Soupape à tiroir selon la revendication 1,
**caractérisée en ce que** pour produire une force de rappel appliquée au tiroir de soupape (1), un ressort (12) est disposé entre le boîtier (4) et le tiroir de soupape (1), lequel sollicite le tiroir de soupape (1) à l'encontre de sa direction d'actionnement avec une force dépendant de la course d'actionnement.

12. Soupape à tiroir selon la revendication 11,
**caractérisée en ce que** le ressort (12) est disposé à l'intérieur d'un espace de détente de pression (11).

13. Soupape à tiroir selon la revendication 11,
**caractérisée en ce que** le ressort (12) est disposé dans une chambre hydraulique (10) et dans une cavité de pression de travail (9).

14. Soupape à tiroir selon la revendication 1,
**caractérisée en ce que** le raccord haute pression (P) débouche dans un espace annulaire (14) intégré dans le boîtier (4), lequel est étanchéifié dans la direction d'actionnement du tiroir de soupape (1) par une bague d'étanchéité (2) formant l'arête de commande (haute pression) (6) et dans la direction opposée à la direction d'actionnement par une autre garniture d'étanchéité (13) entre le tiroir de soupape (1) et le boîtier (4).

15. Soupape à tiroir selon la revendication 1,
**caractérisée en ce que** le raccord de travail (A) débouche dans un autre espace annulaire (14) du boîtier (4), qui est étanchéifié dans la direction opposée à la direction d'actionnement du tiroir de soupape (1) par une bague d'étanchéité (2) formant l'arête de commande (haute pression) (6) et dans la direction d'actionnement par une autre garniture d'étanchéité (13) entre le tiroir de soupape (1) et le boîtier (4).

16. Soupape à tiroir selon la revendication 1,
**caractérisée en ce que** le raccord basse pression (T) débouche dans un espace annulaire (14) dans le boîtier (4), qui est étanchéifié dans la direction d'actionnement par une bague d'étanchéité (2) portant l'arête de commande (basse pression) (6) et dans la direction d'actionnement par l'une des autres garnitures d'étanchéité (13) entre le tiroir de soupape (1) et le boîtier (4).

17. Soupape à tiroir selon la revendication 7,
**caractérisée en ce que** les alésages radiaux blocables (7) sont disposés pratiquement dans un plan sur le tiroir de soupape (1), et **en ce que** les alésages radiaux blocables (7) présentent un diamètre plus petit que les alésages radiaux (7') non blocables.
